# FASCICULE DE BREVET EUROPEEN

(11) **EP 2 751 012 B1**
(45) Date de publication et mention de la délivrance du brevet: **14.10.2015**
(21) Numéro de dépôt: 12746350.3
(22) Date de dépôt: 14.08.2012
(51) Int. Cl.: B66D 1/56

(54) **SYSTEME OPTIQUE DE DETECTION DE L'ETAT D'ENROULEMENT D'UN CABLE SUR UN TREUIL**
OPTISCHES SYSTEM ZUR ERFASSUNG DES WICKLUNGSZUSTANDS EINES KABELS AN EINER HASPEL
OPTICAL SYSTEM FOR DETECTING THE STATE OF WINDING OF A CABLE ON A WINCH

(30) Priorité: 02.09.2011 FR 1102671
(43) Date de publication de la demande: 09.07.2014
(73) Titulaire: THALES, 92200 Neuilly-sur-Seine (FR)
(72) Inventeur: ROLLAND, Yves, Manuel, Alain, F-29280 Locmaria Plouzane (FR)
(74) Mandataire: Derval, Estelle
(86) Numéro de dépôt international: PCT/EP2012/065882
(87) Numéro de publication internationale: WO 2013/029990

(56) Documents cités:
- WO-A1-2010/014048
- CN-A- 101 575 074
- GB-A- 2 295 453
- JP-A- 2000 026 075

## Description

L'invention se rapporte au domaine des systèmes automatiques de déploiement et de récupération d'objets au moyen d'un treuil ou de tout dispositif assimilé permettant de dérouler et d'enrouler un câblé, au bout duquel se trouve attaché l'objet à mettre en oeuvre. Elle se rapporte plus particulièrement au domaine des treuils aéroportés, embarqués sur hélicoptère par exemple, destinés à réaliser la mise à l'eau et la récupération automatisées d'objets divers, tels qu'une nacelle de récupération ou un sonar trempé.

Lorsque l'on souhaite utiliser un treuil de manière un tant soit peu automatique, une opération critique de la mise en oeuvre consiste dans la détermination de l'instant où, le câble étant presque complètement rembobiné, il convient d'arrêter le treuil.

En effet si l'enroulement est arrêté trop tard, l'objet relié à son extrémité peut venir percuter la plateforme supportant le treuil et par là même endommager cette structure et blesser l'opérateur installé sur cette plateforme et être lui-même endommagé. Inversement si cet enroulement est arrêté trop tôt, l'objet est situé trop loin de la plateforme pour pouvoir être récupéré en toute sécurité, sans risque de dommages corporels ou matériels.

Par suite on a généralement recours à la mise en place d'un repère visuel sur le câble qui permet de déterminer visuellement l'instant où le câble peut être considéré comme suffisamment enroulé sur le treuil. Le repère visuel consiste très généralement, de manière simple et efficace, en un repère coloré en blanc, tel qu'un marquage annulaire peint directement sur le câble.

Ainsi dans le cas d'une mise en oeuvre manuelle du treuil, c'est l'opérateur situé sur la plateforme qui, lors du rembobinage du câble, en voyant apparaitre le repère coloré en blanc dans son champ de vision, détermine l'instant approprié pour commander le ralentissement et l'arrêt du treuil.

De manière analogue, dans le cas d'une mise en oeuvre partiellement ou totalement automatisée, on utilise un capteur optique chargé de surveiller le défilement du câble et susceptible de détecter l'apparition dans son secteur d'observation, situé à proximité de la plateforme, de la portion de câble colorée en blanc. Lorsque le dispositif optique détecte le passage de ce repère, il envoie aux moyens qui commandent le moteur du treuil une information de détection les informant qu'il faut stopper le treuil dans un bref délai.

L'utilisation d'un système de détection optique pour détecter l'apparition du repère de fin d'enroulement, présente de nombreux avantages parmi lesquels on peut citer la facilité de mise en oeuvre. En effet, celle-ci nécessite seulement de positionner à proximité du câble, sur une structure mécanique liée à la plateforme, un capteur optique dont le faisceau est dirigé vers le câble. Cependant, dans le cas d'un système de treuil aéroporté monté sur une plateforme, installée dans l'habitacle d'un aéronef par exemple, et destiné à mettre à l'eau et à maintenir en immersion pendant un temps donné un objet donné, puis à remonter rapidement l'objet à bord de l'aéronef, l'utilisation d'un système de détection optique de fin d'enroulement, placé à une distance donnée du câble et solidaire de la plateforme, pose au moins deux difficultés.

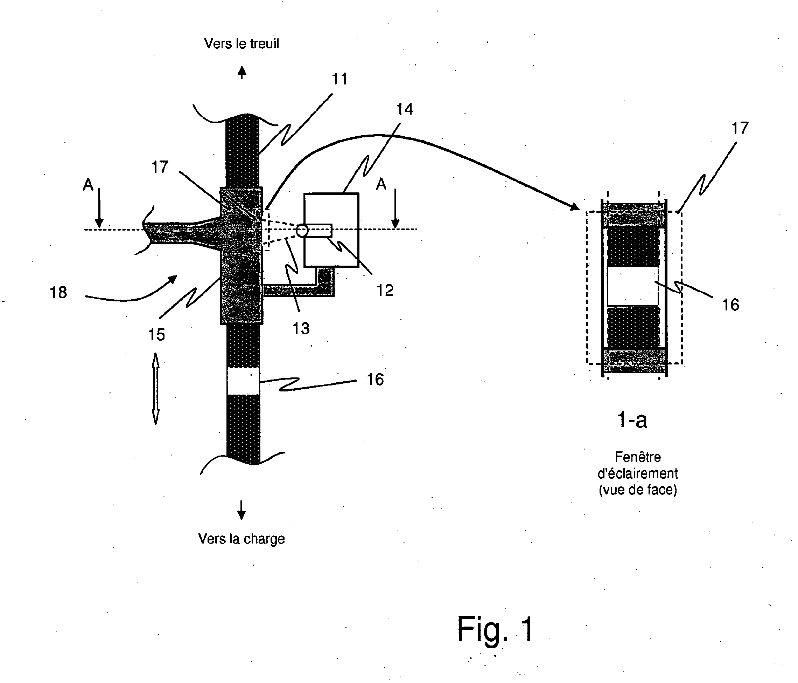

La première difficulté consiste à réaliser, à coup sûr, la détection par le capteur optique du repère coloré en blanc, dans une zone d'observation restreinte, alors que le câble défile avec une vitesse importante, pouvant par exemple atteindre 10m/s. En effet la détection est généralement réalisée au moyen d'un capteur optique configuré pour émettre un pinceau lumineux étroit et détecter la réflexion du pinceau lumineux par un objet réfléchissant. Par suite, la détection est d'autant plus sûre que le détecteur est plus proche de l'objet détecté et que l'objet considéré réfléchi une part plus importante du pinceau lumineux. Or, comme l'illustre la figure 1, s'agissant d'un câble, dont la section est sensiblement circulaire, seul une petite partie de la surface du câble est susceptible de réfléchir le pinceau lumineux dans la direction du capteur. L'énergie réfléchie est donc faible. Par suite, le capteur peut ne rien détecter même en présence de la portion du câble portant le repère coloré en blanc, par nature plus réfléchissante que le reste du câble en métal non coloré qui présente un aspect mat.

La seconde difficulté est liée au fait que, du fait de sa remontée rapide, le câble remonte avec lui de l'eau qui se retrouve projetée dans l'espace situé entre le détecteur et le câble, dans la zone de détection. Cette projection d'eau a pour conséquences d'une part de réduire les performances du détecteur et d'autre part de provoquer des réflexions parasites dans la mesure où, indépendamment de la présence du repère coloré dans la zone de détection, les gouttelettes d'eau dispersées dans la zone de détection peuvent réfléchir le pinceau émis par le détecteur avec une intensité suffisante pour provoquer une détection erronée de la fin de l'opération de rembobinage.

JP 2000 026075A divulgue un système selon le preambule de la revendication 1.

Ainsi le problème qui se pose consiste, avec un détecteur optique, à détecter à coup sûr et avec un minimum de fausses détections, le passage d'une marque blanche sur un câble mat et plutôt sombre défilant à grande vitesse, la zone de détection se situant en ambiance optiquement perturbée. Par suite, un but de l'invention est de proposer une solution simple permettant de résoudre ce problème.

A cet effet l'invention a pour objet un système de contrôle du défilement d'un câble enroulé sur un treuil, du type comportant un dispositif de détection optique actif placé en amont de la zone d'enroulement du câble, à une distance D donnée de celui-ci, et des moyens pour former sur une section du câble une zone colorée fortement réfléchissante, solidaires du câble, le dispositif de détection optique actif comportant une source lumineuse émettant un faisceau lumineux dans la direction du câble, le faisceau lumineux éclairant la section du câble située dans la zone d'éclairement à l'instant considéré, et des moyens pour recevoir les rayons lumineux réfléchis par la surface du câble éclairée par le faisceau lumineux, les moyens pour former un repère coloré étant positionnée sur le câble de telle façon que, lorsque le repère coloré est placé dans le faisceau lumineux émis par le capteur, le faisceau lumineux réfléchi par le câble présente une intensité suffisante pour être détectée. Selon l'invention, le système comporte en outre un guide d'ondes lumineuses interposé entre le dispositif de détection optique et le câble. Avantageusement le guide d'ondes présente une extrémité libre dirigée vers le câble. Avantageusement, le guide d'ondes présente une extrémité fixe solidaire de la source lumineuse. Avantageusement, la longueur du guidé est définie de façon à ce que la distance entre l'extrémité libre du guide et le câble soit minimisée.

Selon un mode de réalisation particulier, l'extrémité libre du guide d'ondes lumineuses présente une surface non plane.

Selon un autre mode de réalisation particulier, l'extrémité libre du guide d'ondes lumineuses présente une surface concave concentrique de la surface du câble.

Selon une forme préférée du mode de réalisation précédent, la longueur du guide d'ondes lumineuses est définie de façon à ce que l'eau entrainée par le câble dans son mouvement forme, entre l'extrémité du guide et la surface du câble, une lame d'eau qui comble l'espace entre l'extrémité du guide et la surface du câble et améliore ainsi le guidage du faisceau lumineux réfléchi par la surface du câble vers le dispositif de détection.

Selon un autre mode de réalisation particulier, le guide d'onde optique présente des faces latérales couvertes d'une fine couche de matériau réfléchissant.

Les caractéristiques et avantages de l'invention seront mieux appréciés grâce à la description qui suit, description qui s'appuie sur les figures annexées qui présentent:
- la figure1, une illustration schématique d'un système de détection optique permettant de détecter l'enroulement complet d'un câble, auquel peut être appliquée l'invention;
- la figure 2, une représentation schématique permettant d'illustrer les problèmes posés par la mise en oeuvre d'un système de détection optique pour contrôler l'état d'enroulement d'un câble sur un treuil;
- la figure 3, une illustration schématique de la structure du système selon l'invention dans une forme de réalisation simple;

- la figure 4, une illustration mettant en évidence une caractéristique de fonctionnement de la forme de réalisation de la figure 3;
- la figure 5, l'illustration d'un mode de réalisation préféré du système selon l'invention.

La description qui suit présente le système selon l'invention dans une application particulière. Ce cas particulier d'utilisation, qui a pour objet de mettre en évidence les avantages de l'invention n'en limite bien entendu pas la portée à cette seule utilisation, le champ de l'invention s'étendant notamment à toute application pour laquelle une détection sans contact d'un marquage placé sur un objet défilant en regard d'un détecteur optique doit être réalisée.

Le cas particulier d'utilisation décrit, concerne la détection de l'enroulement complet du câble d'un treuil installé sur une plateforme monté sur un hélicoptère, ce treuil étant par exemple destiné à la mise en oeuvre d'un système de détection de type sonar.

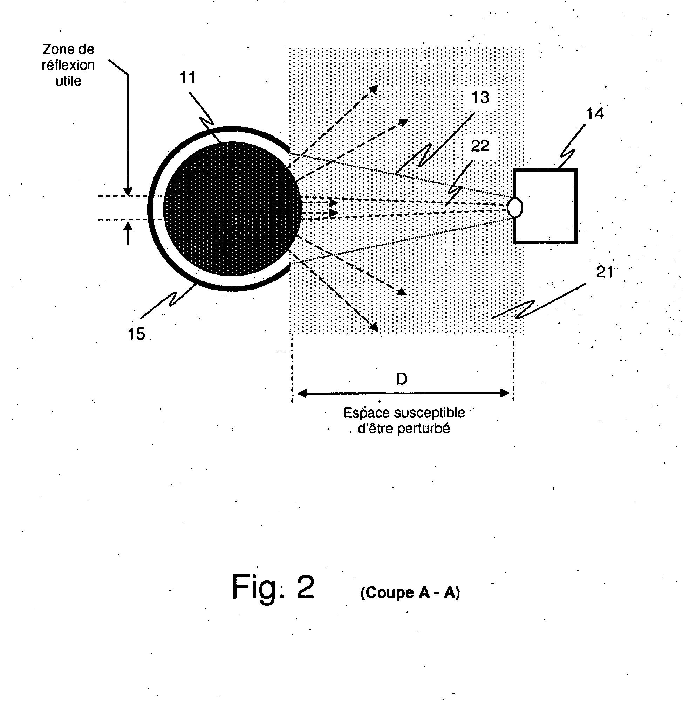

Les figures 1 et 2 permettent d'illustrer la structure et le principe de fonctionnement des dispositifs connus de l'art antérieur et de mettre en évidence les inconvénients de ces dispositifs.

En fonctionnement, l'objet accroché au câble du treuil est descendu à la mer depuis l'hélicoptère et immergé à une profondeur donnée, en restant attaché au câble du treuil, alors que l'hélicoptère maintient un vol stationnaire à la verticale du lieu d'immersion. Puis après usage le système est remonté à bord de l'hélicoptère le plus rapidement possible de façon à ce que ce dernier puisse quitter sa position stationnaire dans les plus brefs délais.

Au cours de l'opération de remontée en particulier, il est utile de disposer d'un moyen permettant à l'opérateur du treuil d'être informé, autrement que "de visu" du fait que l'objet dont on effectue la remontée est arrivé à une position prévue pour laquelle la phase finale de récupération à bord de l'objet peut être est effectuée. La phase finale consiste principalement à enrouler lentement le câble de façon à remonter lentement l'objet à bord de l'hélicoptère, soit pour le décrocher du câble et le mettre dans un endroit de stockage approprié, soit pour sécuriser les mouvements de l'objet si celui-ci est simplement posé sur la plateforme du treuil et reste arrimé au treuil lorsqu'il n'est pas utilisé, soit encore pour arrimer complètement l'objet si celui-ci est maintenu en position suspendue au bout du câble.

C'est pourquoi, si la remontée de l'objet s'effectue principalement à grande vitesse, celle-ci doit être effectuée beaucoup plus lentement lorsque l'objet approche la plateforme. Dans cette zone, la remontée de l'objet doit pouvoir être stoppée instantanément de façon à éviter tout risque de collision brutale avec la plateforme supportant le treuil, collision pouvant endommager l'objet ou le treuil, mais aussi l'hélicoptère lui-même. Durant cette phase finale de la remontée, durant laquelle certaines opérations de manutention sont parfois nécessaires, l'enroulement du câble est généralement commandé manuellement.

A cet effet, comme l'illustre schématiquement la figure 1, on trouve généralement, placé sous la flèche du treuil, une structure mécanique 18 configurée pour assurer le guidage du câble 11 dans la première partie de sa descente, structure sur laquelle est monté un dispositif de détection optique 14. Le dispositif de détection optique 14, qui comporte une source 12 émettant un faisceau lumineux 13 et des moyens pour détecter le faisceau lumineux réfléchi par un objet éclairé par le faisceau émis, est généralement configuré et agencé de façon à émettre son faisceau lumineux 13 dans la direction du câble 11 de façon à éclairer celui-ci sur une zone délimitée par les dimensions du faisceau 13. Dans l'exemple de la figure 1 la structure mécanique 18 comporte une goulotte cylindrique 15, qui peut présenter une ouverture latérale (non visible sur la figure) permettant l'insertion du câble 11, cette goulotte cylindrique 15 étant pourvue d'une ouverture 17 suffisante pour laisser le passage au faisceau lumineux 13 émis par un dispositif de détection optique 14 monté sur la structure, dans une position la plus proche possible du câble, et orientée de façon à ce que le faisceau lumineux émis 14 soit braqué sur cette ouverture 17. Cependant dans le contexte de l'invention, la structure 18 peut comporter tout moyen permettant de guider le câble dans la partie initiale de son défilement et d'éclairer le câble sur une zone délimitée (i. e. une section).

Un tel dispositif est généralement destiné à détecter, par détection d'une différence de puissance réfléchie, un tronçon 16 du câble 11 dont la surface est rendue plus réfléchissante que celle du reste du câble. A cet effet la surface de ce tronçon 16 peut par exemple être recouverte d'une peinture blanche, le reste de la surface du câble étant naturellement d'un gris acier.

Autrement dit, le système comprend des moyens pour former un repère coloré sur un tronçon du câble. Le repère coloré est une zone plus réfléchissante que la surface du reste du câble. Cette zone est une zone de la surface du tronçon du câble.

Ce tronçon particulier 16 est en principe situé à proximité de l'extrémité libre du câble, à laquelle l'objet (i.e. la charge) est accroché. Ainsi, lors de la remontée de l'objet, l'enroulement du câble 11 sur le treuil amène naturellement le tronçon 16 du câble dans la zone éclairée par le faisceau 13 du dispositif de détection 14, de sorte que, la réflexion du faisceau émis étant plus importante, il est possible de déterminer que l'enroulement du câble 11 est presque achevé et que la phase finale de récupération de l'objet doit être entreprise, phase pour laquelle le rembobinage du câble 11 doit s'effectuer à vitesse réduite.

Un tel arrangement, connu de l'art antérieur présente l'avantagé de la simplicité. En effet sa mise en oeuvre ne nécessite que la mise en place d'un détecteur optique 14 sur la structure mécanique 18 déjà existante et d'un marquage réfléchissant sur un tronçon 16 du câble 11 convenablement déterminé. Cependant, elle présente certaines limitations qui rendent son fonctionnement parfois incertain, en particulier dans le cas d'un treuil assurant la descente et la remontée d'un objet destiné à être immergé dans la mer à une certaine profondeur, immersion qui entraine celle du câble.

Dans de telles circonstances, la remontée rapide du câble entraine la formation à proximité du câble, à partir de sa surface, d'une zone de nébulosités constituée fines gouttelettes provenant du film d'eau entrainé par le câble lors de sa sortie de l'eau durant son rembobinage. Les gouttelettes ainsi présentes dans le voisinage du câble ont pour effet d'altérer la transmission du faisceau 13 vers la surface du câble et la réflexion du faisceau émis, en direction du détecteur du dispositif 14.

Les conséquences de ce phénomène peuvent par suite consister en des détections parasites par réflexion du faisceau 13 par les gouttelettes d'eau en suspension, réflexions parasites qui se produisent indifféremment alors que la zone du câble éclairée est, ou n'est pas, la zone 16 rendue réfléchissante. Ces réflexions parasites conduisent parfois à limiter de manière trop précoce la vitesse d'enroulement du câble 11 et par là même à retarder le départ de l'hélicoptère de la zone considérée.

Les conséquences de ce phénomène peuvent également consister en une absence de détection au moment opportun, le faisceau émis ou réfléchi par la zone 16 du câble rendue réfléchissante à cet effet étant diffusé par le milieu et par suite non renvoyé vers le détecteur et donc non détecté. Ceci se traduit par le maintien en fin de rembobinage d'une vitesse d'enroulement rapide, qui peut empêcher le bon déroulement de la phase finale de récupération de l'objet et occasionner des dommages à l'ensemble.

La présence de cette zone de nébulosités est d'autant plus préjudiciable au système de détection optique que celui-ci est généralement positionné au plus près du câble, pour des raisons d'efficacité optique évidentes pour l'homme du métier. Comme l'illustre la figure 2 (vue en coupe dans le plan horizontal passant par AA) ce phénomène se traduit par la présence entre le détecteur et la surface du câble éclairée par le détecteur d'un espace 21, de largeur D, susceptible d'être perturbé du point de vue de la propagation des ondes lumineuses.

Pour résoudre ce problème occasionné par la présence d'une zone pouvant altérer la propagation des ondes lumineuses, le dispositif de détection selon l'invention se voit adjoindre des moyens permettant d'assurer une propagation optimale des ondes lumineuses entre le dispositif de détection 14 et le câble 11. Selon l'invention ces moyens consistent en la mise en place entre le dispositif de détection 14 et le câble 11 d'un guide d'ondes lumineuses. Ce guide d'ondes lumineuses est avantageusement agencé de façon que les ondes lumineuses se propageant entre le câble et le dispositif de détection se propagent dans le guide d'ondes. Autrement dit, le guide d'onde guide les ondes lumineuses se propageant entre le câble et le dispositif de détection (dans les deux sens de propagation : depuis le câble, vers le dispositif de détection et inversement).

Avantageusement, le guide d'ondes est configuré et agencé de façon optimale, comme décrit dans la suite du texte qui présente plusieurs formes de réalisation du dispositif selon l'invention.

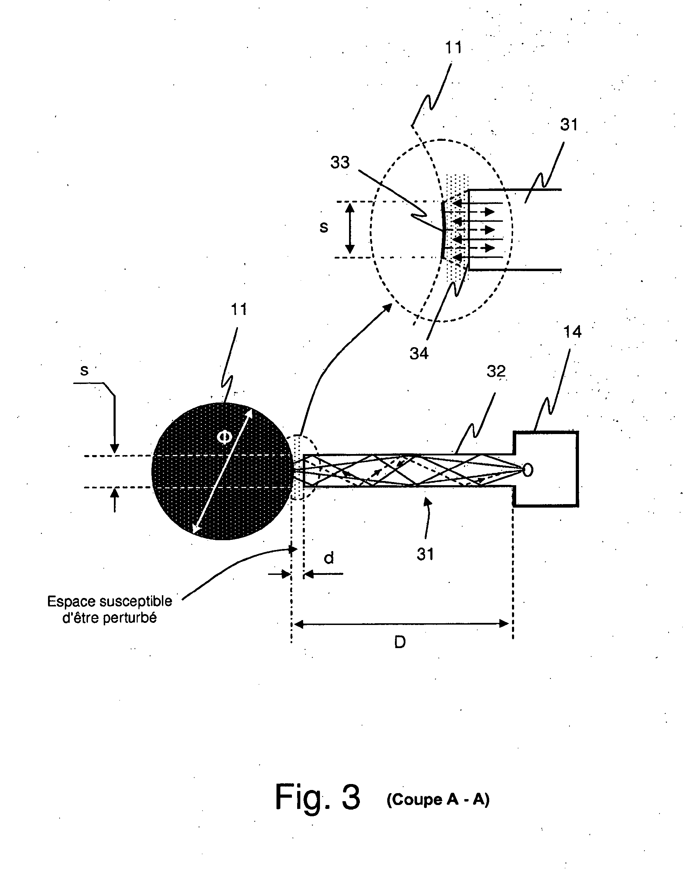

La figure 3 présente un schéma de principe du dispositif selon l'invention, dans sa configuration la plus simple (vue en coupe dans le plan horizontal passant par AA). Celui-ci comporte, comme décrit précédemment, un détecteur optique 14 comportant une source 12 émettant un faisceau lumineux 13 et des moyens pour détecter le signal réfléchi dans la direction de la source par un objet éclairé, la section du câble 11 éclairée par le faisceau 13 dans l'exemple considéré. Ce dispositif est ici avantageusement complété par un guide d'ondes lumineuses 31, agencé de façon à être éclairé par la source 12, dont la longueur L est telle que la distance libre séparant le dispositif de la paroi du câble se trouve ramenée à une valeur d sensiblement inférieure à la distance D séparant la source 12 proprement dite du câble. Ainsi, l'espace dans lequel la propagation des ondes lumineuses entre le dispositif de détection et le câble risque d'être perturbée par la présence des gouttelettes d'eau produites par la remonté rapide du câble est avantageusement réduite.

Avantageusement, le guide d'ondes lumineuses est agencé de façon à ce que le dispositif de détection 14 éclaire le câble avec un faisceau lumineux 13 guidé, sensiblement pointé sur l'axe de symétrie du câble. Les dimensions du guide d'ondes lumineuses 31 sont en outre déterminées en fonction de la section du câble 11. En effet, comme l'illustre les figures 2 et 3, lorsque le faisceau lumineux 13 produit par la source 12 éclaire le câble, seule la partie du faisceau ayant éclairé la surface du câble dans une zone étroite autour de la direction pointée est susceptible, du fait de la courbure de la surface du câble, d'être réfléchie dans la direction du guide 31 et donc d'être reçue par le détecteur 14. Les ondes éclairant la surface du câble 11 avec une incidence plus faibles sont réfléchies dans des directions qui ne permettent pas leur capture par le dispositif de détection 14. Elles sont donc inutiles de ce point de vue.

Le diamètre Φ du câble 11 définit ainsi la taille s de la zone utile 33 de sa surface, susceptible de réfléchir le faisceau 13 émis par la source 12. Selon l'invention les dimensions du guide d'ondes lumineuses est défini de façon à éclairer une zone recouvrant totalement la zone utile 33. Comme l'illustre la figure 3, le faisceau 13 émis par la source 12 est ainsi avantageusement focalisé sur cette surface. Inversement les ondes lumineuses réfléchies par cette dernière sont canalisées vers les moyens de détection du dispositif 14.

Dans un mode de réalisation simple, tel que celui illustré par la figure 3, le guide d'ondes lumineuses est de forme parallélépipédique simple, ses faces terminales formant des surfaces planes rectangulaires perpendiculaires à l'axe principal du guide 31. Une de ses faces d'extrémité 34 est positionnée en regard de la surface convexe du câble 11. Cette configuration, quoiqu'avantageuse en termes de réalisation peut cependant être optimisée à différents points de vue.

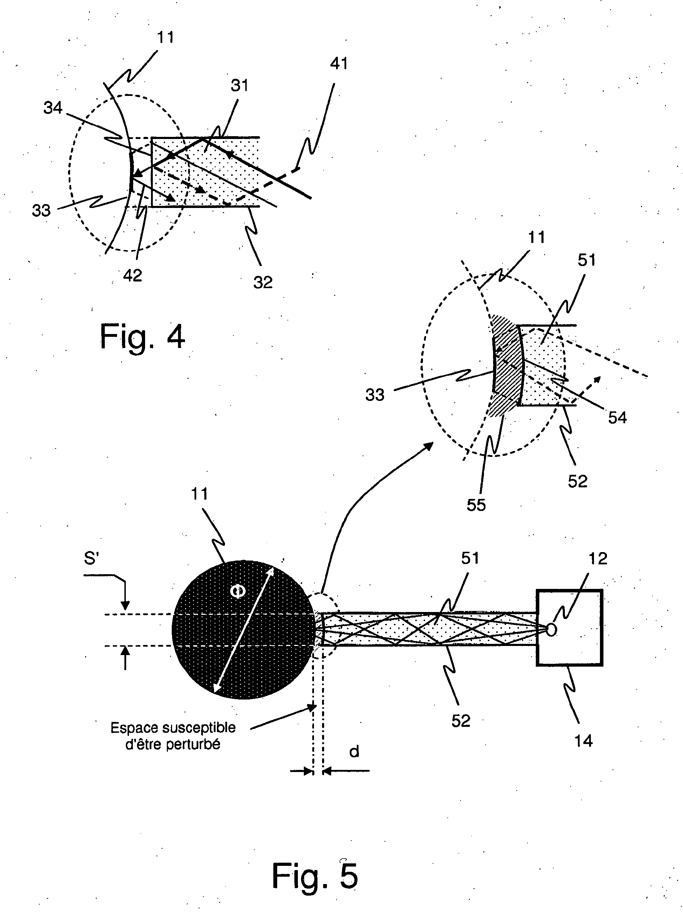

Elle peut en particulier être optimisée de façon à limiter les réflexions parasites du faisceau produit par la source 12 contre la paroi constituant la face 34 du guide, paroi à travers laquelle sont transmises les ondes lumineuses émises par la source 12. De telles réflexions se produisent lorsqu'une onde lumineuse traverse la surface plane d'un cristal, quelle que soit, par ailleurs, l'orientation relative de l'onde par rapport à cette surface. Ces réflexions parasites 41, illustrées par la figure 4, composent, de manière connue, un bruit de fond qui a pour effet de diminuer la sensibilité de détection du dispositif, les ondes lumineuses 41 réfléchies par la face 34 du guide 31 ayant, dans certains cas, une intensité au moins comparable à celle des ondes 42 réfléchies par la surface utile 33 du câble 11.

Dans le but de limiter ces réflexions parasites 41 à l'intérieur du guide 31 on utilise, dans une forme de réalisation préférée, illustrée par la figure 5, un guide 51 dont la face d'extrémité 54 présente une surface non plane, de préférence une surface concave dont le rayon de courbure correspond au diamètre Φ du câble 11. Ce type de configuration présente naturellement l'avantage de limiter, dans une large mesure, les réflexions parasites à l'intérieur du guide 51 du faisceau lumineux 13 émis par la source 12.

Il est à noter que d'autres configurations de la face d'extrémité 54 sont envisageables pour limiter ces réflexions parasites. En particulier, il est possible de donner à cette face un profil convexe. L'invention ne se limite donc pas seulement au seul mode de réalisation dans lequel la face externe 54 du guide d'ondes lumineuses présente une surface concave. Néanmoins ce mode de réalisation présente d'autres avantages et est à ce titre considéré comme un mode de réalisation préféré:
- il permet, du fait de la concavité de la face 54, d'accroitre, dans une certaine mesure toutefois, les dimensions de la zone utile 33 de la surface du câble pour laquelle la réflexion du faisceau émis se fait dans la zone couverte par la face d'extrémité 54 du guide 51.
- il permet, par ailleurs, pour peu que la distance d soit suffisamment faible, d'établir et de maintenir pendant toute la remontée du câble 11, la présence d'une pellicule d'eau 55 qui vient se placer dans l'espace séparant l'extrémité concave 54 du guide 51 et la surface du câble 11. Cette pellicule d'eau 55 établit avantageusement une continuité entre la surface du câble 11 et le guide d'onde 51, continuité qui favorise un bon éclairement de la surface du câble 11 par le faisceau lumineux 13 émis par la source 12 et une capture optimale, sans risque de perturbations, des ondes lumineuses réfléchies par la surface utile 33 du câble.

Il est à noter également que, quel que soit le mode de réalisation envisagé, il est possible de renforcer l'efficacité du guidage du faisceau lumineux 13 émis par la source 12 et des ondes lumineuses réfléchies par la surface du câble 11 en appliquant sur les faces latérales 32 (52) du guide 31 (51) une couche de matériau réfléchissant, de préférence fine, de façon à minimiser les pertes dans le guide.

Avantageusement, le guide d'ondes présente une extrémité fixe solidaire de la source 12. Avantageusement, comme visible sur la figure 5, cette extrémité est contigüe au dispositif 14. Avantageusement, comme visible sur cette figure, cette extrémité est disposée de façon à ce que toutes les ondes émises par la source et sortant du dispositif 14 se propagent dans le guide d'ondes.

## Revendications

1. Système de contrôle du défilement d'un câble (11) enroulé sur un treuil, du type comportant un dispositif de détection optique actif (14) placé en amont de la zone d'enroulement du câble (11), à une distance D donnée de celui-ci, et des moyens pour former un repère coloré (16) sur un tronçon du câble (11), ledit repère coloré étant une zone plus réfléchissante que la surface du reste du câble (11), le dispositif de détection optique actif (14) comportant une source lumineuse (12) émettant un faisceau lumineux (13) dans la direction du câble (11), le faisceau lumineux éclairant la zone du câble située dans une zone d'éclairement à l'instant considéré, et des moyens pour recevoir les rayons lumineux réfléchis par la surface du câble (11) éclairée par le faisceau lumineux (13), les moyens pour former un repère coloré étant positionnés sur le câble (11) de telle façon que, lorsque le repère coloré (16) est placé dans le faisceau lumineux (13), le faisceau lumineux réfléchi par le câble présente une intensité suffisante pour être détectée;
**caractérisé en ce qu'**il comporte en outre un guide d'ondes lumineuses (31, 51) interposé entre le dispositif de détection optique (14) et le câble (11).

2. Système selon la revendication précédente, dans lequel le guide d'ondes lumineuses présente une extrémité libre (34, 54) dirigée vers le câble (11).

3. Système selon la revendication précédente, dans lequel le guide d'ondes lumineuse présente une extrémité fixe solidaire de la source lumineuse (12).

4. Système selon l'une quelconque des revendications 2 à 3, dans lequel la longueur du guide d'ondes est définie de façon à ce que la distance entre l'extrémité libre (34, 54) du guide et le câble (11) soit minimisée.

5. Système selon l'une quelconque des revendications 2 à 4, **caractérisé en ce que** l'extrémité libre (54) du guide d'ondes lumineuses (51) présente une surface non plane.

6. Système selon la revendication précédente, **caractérisé en ce que** l'extrémité libre (54) du guide d'ondes lumineuses (51) présente une surface concave concentrique de la surface du câble.

7. Système selon la revendication 6, **caractérisé en ce que** la longueur du guide d'ondes lumineuses est définie de façon à ce que l'eau entrainée par le câble dans son mouvement forme entre l'extrémité du guide et la surface du câble une lame d'eau (55) qui comble l'espace entre l'extrémité (54) du guide (51) et la surface du câble (11) et améliore ainsi le guidage du faisceau lumineux réfléchi par la surface du câble vers le dispositif de détection (14).

8. Système selon l'une des revendications 1 à 7, **caractérisé en ce que** le guide d'onde optique (31, 51) présente des faces latérales (32, 52) couvertes d'une couche de matériau réfléchissant.

9. Dispositif selon l'une quelconque des revendications précédentes, dans lequel le guide d'ondes présente une longueur (L) telle que la distance libre séparant le dispositif de détection (14) de la paroi du câble (11) soit sensiblement inférieure à la distance séparant la source (12) du câble (11).

## Patentansprüche

1. System zum Steuern des Abwickelns eines auf eine Winde gewickelten Kabels (11) des Typs mit einer aktiven optischen Erkennungsvoruchtung (14), die oberhalb der Wickelzone des Kabels (11) in einem gegebenen Abstand D davon platziert ist, und mit Mitteln zum Bilden einer farbigen Bezugsmarkierung (16) auf einem Abschnitt des Kabels (11), wobei die farbige Bezugsmarkierung eine Zone ist, die reflexionsfähiger ist als die Oberfläche des Rests des Kabels (11), wobei die aktive optische Erkennungsvorrichtung (14) eine Lichtquelle (12) umfasst, die einen Lichtstrahl (13) in Richtung auf das Kabel (11) aussendet, wobei der Lichtstrahl die Zone des Kabels beleuchtet, die sich zu dem betrachteten Augenblick in einer Beleuchtungszone befindet, und mit Mitteln zum Empfangen der Lichtstrahlen, die von der Oberfläche des Kabels (11), die von dem Lichtstrahl (13) beleuchtet wird, reflektiert werden, wobei die Mittel zum Bilden einer farbigen Bezugsmarkierung so auf dem Kabel (11) positioniert sind, dass, wenn die farbige Bezugsmarkierung (16) in dem Lichtstrahl (13) platziert ist, der von dem Kabel reflektierte Lichtstrahl intensiv genug ist, um erkannt zu werden,
**dadurch gekennzeichnet, dass** es ferner einen Lichtwellenleiter (31, 51) umfasst, der zwischen der optischen Erkennungsvorrichtung (14) und dem Kabel (11) angeordnet ist.

2. System nach dem vorherigen Anspruch, wobei der Lichtwellenleiter ein freies Ende (34, 54) hat, das auf das Kabel (11) gerichtet ist.

3. System nach dem vorherigen Anspruch, wobei der Lichtwellenleiter ein festes Ende einstückig mit der Lichtquelle (12) hat.

4. System nach einem der Ansprüche 2 bis 3, wobei die Länge des Wellenleiters so definiert ist, dass der Abstand zwischen dem freien Ende (34, 54) des Leiters und dem Kabel (11) minimiert ist.

5. System nach einem der Ansprüche 2 bis 4, **dadurch gekennzeichnet, dass** das freie Ende (54) des Lichtwellenleiters (51) eine nichtplanare Oberfläche hat.

6. System nach dem vorherigen Anspruch, **dadurch gekennzeichnet, dass** das freie Ende (54) des Lichtwellenleiters (51) eine konkave Fläche konzentrisch zur Oberfläche des Kabels hat.

7. System nach Anspruch 6, **dadurch gekennzeichnet, dass** die Länge des Lichtwellenleiters so definiert ist, dass das von dem Kabel mitgeführte Wasser bei seiner Bewegung zwischen dem Ende des Leiters und der Oberfläche des Kabels eine Wasserschneide (55) bildet, die den Raum zwischen dem Ende (54) des Leiters (51) und der Oberfläche des Kabels (11) ausfüllt und somit die Leitung des von der Oberfläche des Kabels reflektierten Lichtstrahls in Richtung auf die Erkennungsvorrichtung (14) verbessert.

8. System nach einem der Ansprüche 1 bis 7, **dadurch gekennzeichnet, dass** der optische Wellenleiter (31, 51) laterale Flächen (32, 52) hat, die von einer Schicht aus reflexionsfähigem Material bedeckt sind.

9. Vorrichtung nach einem der vorherigen Ansprüche, wobei der Wellenleiter eine solche Länge (L) hat, dass der freie Abstand, der die Erkennungsvoruchtung (14) von der Wand des Kabels (11) trennt, im Wesentlichen geringer ist als der Abstand, der die Quelle (12) von dem Kabel (11) trennt.

## Claims

1. A system for controlling the unwinding of a cable (11) wound on a winch, of the type comprising an active optical detection device (14) placed upstream of the winding zone of said cable (11) at a given distance D therefrom, and means for forming a coloured reference marker (16) on a section of said cable (11), said coloured reference marker being a zone that is more reflective than the surface of the rest of said cable (11), said active optical detection device (14) comprising a light source (12) emitting a light beam (13) towards said cable (11), said light beam illuminating the zone of said cable located in an illumination zone at the considered instant, and means for receiving the light rays reflected by the surface of said cable (11) illuminated by said light beam (13), said means for forming a coloured reference marker being positioned on said cable (11) such that, when said coloured reference marker (16) is placed in said light beam (13), the light beam reflected by said cable is of sufficient intensity to be detected,
**characterised in that** it further comprises a light waveguide (31, 51) interposed between said optical detection device (14) and said cable (11).

2. The system according to the preceding claim, wherein said light waveguide has a free end (34, 54) directed towards said cable (11).

3. The system according to the preceding claim, wherein said light waveguide has a fixed end integral with said light source (12).

4. The system according to any one of claims 2 to 3, wherein the length of the waveguide is defined so that the distance between the free end (34, 54) of said guide and said cable (11) is minimised.

5. The system according to any one of claims 2 to 4, **characterised in that** said free end (54) of said light waveguide (51) has a non-planar surface.

6. The system according to the preceding claim, **characterised in that** said free end (54) of said light waveguide (51) has a concave surface concentric with the surface of said cable.

7. The system according to claim 6, **characterised in that** the length of said light waveguide is defined so that the water entrained by said cable as it moves forms, between the end of said guide and the surface of said cable, a sheet of water (55) that fills the space between said end (54) of said guide (51) and the surface of said cable (11) and thus improves the guidance of the light beam reflected by the surface of said cable towards said detection device (14).

8. The system according to any one of claims 1 to 7, **characterised in that** said optical waveguide (31, 51) has lateral faces (32, 52) covered with a layer of reflective material.

9. A device according to any one of the preceding claims, wherein the length (L) of the waveguide is such that the free distance separating said detection device (14) from the wall of said cable (11) is substantially less than the distance separating said source (12) from said cable (11).
